# EUROPÄISCHE PATENTSCHRIFT

(11) **EP 3 798 020 B1**
(45) Veröffentlichungstag und Bekanntmachung des Hinweises auf die Patenterteilung: **06.07.2022**
(21) Anmeldenummer: 20193763.8
(22) Anmeldetag: 01.09.2020
(51) Int. Cl.: B60C 5/14, B60C 19/00, B29D 30/00

(54) **REIFEN**
TYRE
PNEUMATIQUE

(30) Priorität: 30.09.2019 DE 102019215069
(43) Veröffentlichungstag der Anmeldung: 31.03.2021
(73) Patentinhaber: Continental Reifen Deutschland GmbH, 30165 Hannover (DE)
(72) Erfinder: Ehmke, Tobias, 30419 Hannover (DE)
(74) Vertreter: Continental Corporation

(56) Entgegenhaltungen:
- US-A1- 2006 164 250
- US-B2- 7 556 074

## Beschreibung

Die Erfindung betrifft einen Reifen.

Die Erfindung geht aus von einem Reifen. Dabei ist der Reifen um eine Rotationsachse in in eine Umlaufrichtung rotierbar. Der Reifen weist einen Laufstreifen und eine Reifeninnenschicht auf. Der Reifen weist ferner einen Überlappungsbereich auf. Dabei ist der Überlappungsbereich ein solcher Bereich des Reifens, in dem sich die Reifeninnenschicht überlappt. Der Überlappungsbereich weist eine erste geometrische Mittelinie auf.

Der Reifen weist ferner eine Symmetrieebene auf. Dabei ist die Rotationsachse senkrecht zu der Symmetrieebene ausgerichtet und schneidet die Symmetrieebene in einem Mittelpunkt.

Der Reifen weist ferner eine elektromagnetische Sende- und Empfangsvorrichtung auf. Dabei ist die elektromagnetische Sende- und Empfangsvorrichtung in einem Anbringungsbereich des Reifens angeordnet. Der Anbringungsbereich weist eine zweite geometrische Mittellinie auf. Die erste geometrische Mittellinie schneidet die Symmetrieebene in einem ersten Schnittpunkt. Die zweite geometrische Mittellinie schneidet die Symmetrieebene in einem zweiten Schnittpunkt. Dabei führt eine erste Verbindungslinie von dem ersten Schnittpunkt zu dem Mittelpunkt und eine zweite Verbindungslinie führt von dem zweiten Schnittpunkt zu dem Mittelpunkt.

Die erste Verbindungslinie und die zweite Verbindungslinie liegen in der Symmetrieebene.

Bei der elektromagnetischen Sende- und Empfangsvorrichtung handelt es sich insbesondere um eine RFID-Vorrichtung. RFID steht für Radio Frequency Identification und bedeutet Identifizierung mittels elektromagnetischer Wellen.

Elektromagnetisch bedeutet in diesem Zusammenhang elektromagnetisch wirkend, das bedeutet, dass die elektromagnetische Sende- und Empfangsvorrichtung geeignet ist, Signale mittels elektromagnetischer Wellen zu senden und zu empfangen.

Aus dem Stand der Technik sind Reifen bekannt, wobei bei diesen Reifen der Einsatz von elektromagnetischen Sende- und Empfangsvorrichtungen bekannt ist. Die Annordnung der elektromagnetischen Sende- und Empfangsvorrichtung innerhalb des Reifens könnte mit einer physischen Einwirkung auf die Struktur des Reifens einhergehen. Üblicherweise sollen Einwirkungen auf die Struktur des Reifens weitestgehend minimiert werden.

Beispielsweise werden in der US2006/164250 A1 und der US7556074 B2 Reifen offenbart, wobei diese Reifen elektromagnetische Sende- und Empfangsvorrichtungen aufweisen.

Der Erfindung liegt daher die Aufgabe zugrunde, einen Reifen bereitzustellen, bei dem die Einwirkung der Anwendung einer elektromagnetischen Sende- und Empfangsvorrichtung auf die Struktur eines Reifens weitestgehend minimiert wird.

Die Aufgabe wird erfindungsgemäß dadurch gelöst, dass die erste Verbindungslinie und die zweite Verbindungslinie einen Winkel von 160° bis 200° einschließen.

Die erste geometrische Mittellinie verläuft insbesondere durch den physikalischen und geometrischen Schwerpunkt des Überlappungsbereichs. Die zweite geometrische Mittellinie verläuft insbesondere durch den physikalischen und geometrischen Schwerpunkt der elektromagnetischen Sende- und Empfangsvorrichtung.

Durch den erfindungsgemäßen Umstand, wonach die erste Verbindungslinie und die zweite Verbindungslinie einen Winkel von 160° bis 200° einschließen, wird eine derartige Anordnung der elektromagnetischen Sende- und Empfangsvorrichtung innerhalb des Fahrzeugreifens ermöglicht, bei der die Einwirkung der elektromagnetischen Sende- und Empfangsvorrichtung auf die Struktur des Reifens weitestgehend minimiert ist. Hintergrund dieser Minimierung ist, dass keine mechanische Belastung des Überlappungsbereichs der Reifeninnenschicht durch die elektromagnetische Sende- und Empfangsvorrichtung verursacht wird. Somit wird ein verbesserter Reifen bereitgestellt.

Bei dem Reifen handelt es sich insbesondere um einen PKW-Reifen, um einen LKW-Reifen oder um einen Zweirad-Reifen.

Weitere vorteilhafte Ausgestaltungsformen der vorliegenden Erfindung sind Gegenstand der Unteransprüche.

Gemäß einer vorzugsweisen Ausgestaltungsform der Erfindung schließen die erste Verbindungslinie und die zweite Verbindungslinie einen Winkel von 170° bis 190° ein.

Gemäß einer nächsten vorzugsweisen Ausgestaltungsform der vorliegenden Erfindung ist die elektromagnetische Sende- und Empfangsvorrichtung in einem Seitenwandbereich des Reifens oder in einem Wulstbereich des Reifens angeordnet.

Durch erfindungsgemäßen Umstand, wonach die elektromagnetische Sende- und Empfangsvorrichtung in einem Seitenwandbereich des Reifens oder in einem Wulstbereich des Reifens angeordnet ist, wird die Möglichkeit der Einwirkung auf die Reifeninnenschicht weiter vermindert. Darüber hinaus wird eine verbesserte Auslesefähigkeit der elektromagnetischen Sende- und Empfangsvorrichtung sichergestellt.

Gemäß einer nächsten vorzugsweisen Ausgestaltungsform der vorliegenden Erfindung steht die elektromagnetische Sende- und Empfangsvorrichtung in keinem unmittelbaren Kontakt mit einer zu der elektromagnetischen Sende- und Empfangsvorrichtung nächstgelegenen Seitenwandoberfläche. Insbesondere steht die elektromagnetische Sende- und Empfangsvorrichtung in keinem unmittelbaren Kontakt mit einem zu der elektromagnetischen Sende- und Empfangsvorrichtung nächstgelegenen Seitenwandkomponente.

Durch den erfindungsgemäßen Umstand, wonach die elektromagnetische Sende- und Empfangsvorrichtung in keinem unmittelbaren Kontakt mit einer zu der elektromagnetischen Sende- und Empfangsvorrichtung nächstgelegenen Seitenwandoberfläche steht, wird eine solche Einbettung der elektromagnetischen Sende- und Empfangsvorrichtung innerhalb des Reifens erzielt, die mit optimalen Bedingungen für das Sende- und Empfangsvermögen der elektromagnetischen Sende- und Empfangsvorrichtung einhergeht.

Gemäß einer nächsten vorzugsweisen Ausgestaltungsform der vorliegenden Erfindung ist die elektromagnetische Sende- und Empfangsvorrichtung zwischen der Reifeninnenschicht des Reifens und einer Karkasseinlage des Reifens angeordnet.

Durch den erfindungsgemäßen Umstand, wonach die elektromagnetische Sende- und Empfangsvorrichtung zwischen der Reifeninnenschicht des Reifens und einer Karkasseinlage des Reifens angeordnet ist, wird die Möglichkeit der Einwirkung auf die Reifeninnenschicht weiter vermindert und darüber hinaus eine verbesserte elektromagnetische Auslesefähigkeit der elektromagnetischen Sende- und Empfangsvorrichtung bewirkt.

Weitere Merkmale, Vorteile und Einzelheiten, auf die die Erfindung in ihrem Umfang aber nicht beschränkt ist, werden nun anhand der Zeichnungen näher beschrieben.

Es zeigt:
Fig. 1: Eine schematische Darstellung eines erfindungsgemäßen Reifens;
Fig. 2: eine schematische Darstellung eines erfindungsgemäßen Reifens gemäß einer weiteren Ansicht;
Fig. 3: eine weitere schematische Darstellung eines erfindungsgemäßen Reifens gemäß einer weiteren Ausführungsform;
Fig. 4: eine schematische Darstellung eines erfindungsgemäßen Reifens gemäß einer weiteren Ausführungsform;
Fig. 5: eine schematische Darstellung eines Bereichs eines erfindungsgemäßen Reifens gemäß einer weiteren Ausführungsform;
Fig. 6: eine weitere schematische Darstellung eines Bereichs eines erfindungsgemäßen Reifens gemäß einer weiteren Ausführungsform.

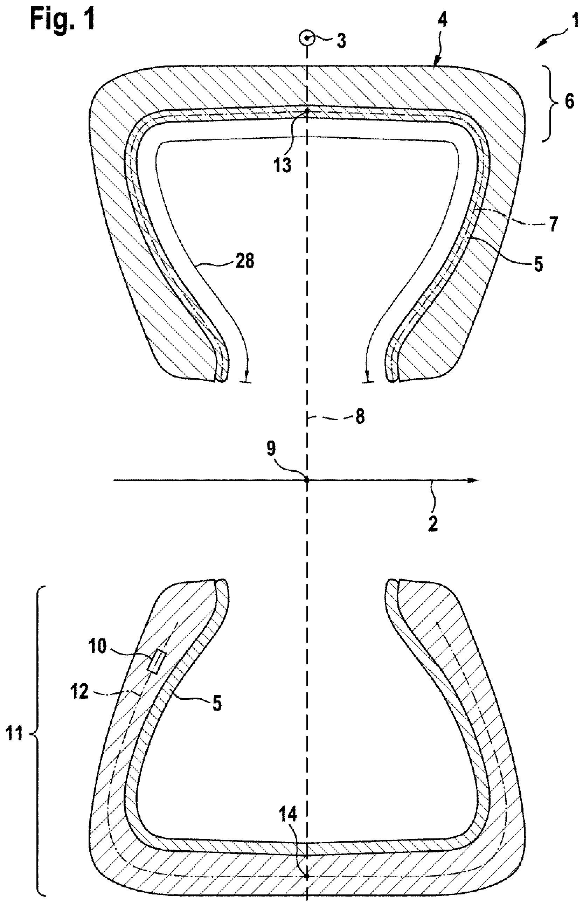

In der Figur 1 ist ein erfindungsgemäßer Reifen 1 schematisch in Radialschnittansicht dargestellt. Der Reifen 1 ist um eine Rotationsachse 2 in eine Umlaufrichtung 3 rotierbar. Der Reifen 1 weist einen Laufstreifen 4 und eine Reifeninnenschicht 5 auf. Der Reifen 1 weist ferner einen Überlappungsbereich 6 auf, wobei der Überlappungsbereich 6 ein solcher Bereich des Reifens 1 ist, in dem sich die Reifeninnenschicht 5 in Umlaufrichtung 3 überlappt. Der Überlappungsbereich 6 weist eine erste geometrische Mittellinie 7 auf. Die Mittellinie 7 erstreckt sich über eine gesamte Ausdehnung 28 der Reifeninnenschicht 5.

Reifen 1 weist ferner eine Symmetrieebene 8 auf. Dabei ist die Rotationsachse 2 senkrecht zu der Symmetrieebene 8 ausgerichtet und schneidet die Symmetrieebene 8 in einem Mittelpunkt 9.

Der Reifen 1 weist ferner eine elektromagnetische Sende- und Empfangsvorrichtung 10 auf. Die elektromagnetische Sende- und Empfangsvorrichtung 10 ist in einem Anbringungsbereich 11 des Reifens 1 angeordnet. Der Anbringungsbereich 11 weist eine zweite geometrische Mittellinie 12 auf. Die erste geometrische Mittellinie 7 schneidet die Symmetrieebene 8 in einem ersten Schnittpunkt 13. Die zweite geometrische Mittellinie 12 schneidet die Symmetrieebene 8 in einem zweiten Schnittpunkt 14.

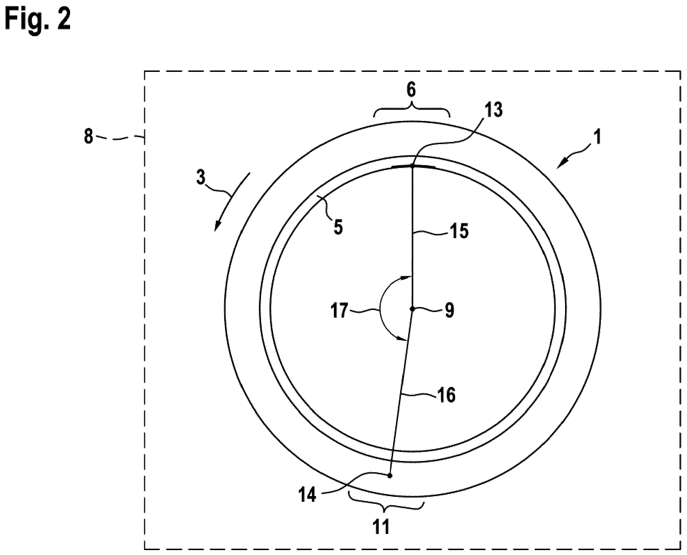

In der Figur 2 ist der in der Figur 1 schematisch dargestellte Reifen 1 in einer anderen Ansicht dargestellt. Die Sicht auf den Reifen 1 ist in einer Richtung parallel zu der Rotationsachse 2 dargestellt. Eine erste Verbindungslinie 15 führt von dem ersten Schnittpunkt 13 zu dem Mittelpunkt 9. Eine zweite Verbindungslinie 16 führt von dem zweiten Schnittpunkt 14 zu dem Mittelpunkt 9.

Die erste Verbindungslinie 15 und die zweite Verbindungslinie 16 schließen einen Winkel 17 von 160° bis 200° ein.

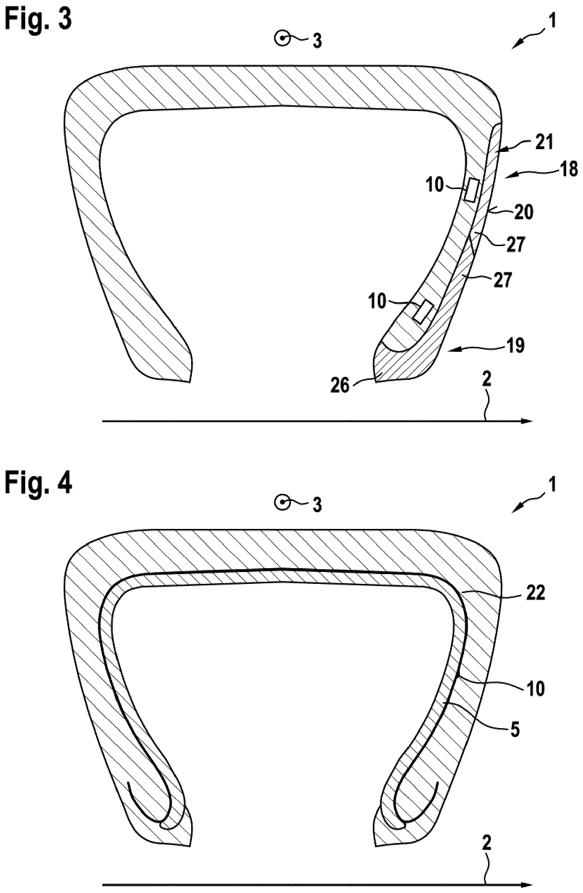

In der Figur 3 ist ein erfindungsgemäßer Reifen 1 gemäß einer weiteren Ausführungsform schematisch in Radialschnittansicht dargestellt. Gemäß der Darstellung in der Figur 3 ist die elektromagnetische Sende- und Empfangsvorrichtung 10 beispielhaft an zwei Anbringungsorten innerhalb des Reifens 1 angeordnet. Gemäß der Darstellung in der Figur 3 ist die elektromagnetische Sende- und Empfangsvorrichtung in einem Seitenwandbereich 18 des Reifens 1 oder in einem Wulstbereich 19 des Reifens 1 angeordnet. Dabei steht die elektromagnetische Sende- und Empfangsvorrichtung 10 in keinem unmittelbaren Kontakt mit einer zu der elektromagnetischen Sende- und Empfangsvorrichtung 10 nächstgelegenen Seitenwandoberfläche 20.

Ferner steht gemäß der Darstellung in der Figur 3 die elektromagnetische Sende- und Empfangsvorrichtung 10 in keinem unmittelbaren Kontakt mit einem zu der elektromagnetischen Sende- und Empfangsvorrichtung 10 nächstgelegenen Seitenwandkomponente 21. Der Reifen 1 weist dabei ein Seitenwandbauteil 27 auf. Das Seitenwandbauteil 27 weist die Seitenwandkomponente 21 und eine Rimstripkomponente 26 auf. Die Seitenwandkomponente 21 ist innerhalb des Seitenwandbereichs 18 angeordnet

In der Figur 4 ist ein erfindungsgemäßer Reifen 1 gemäß einer weiteren Ausführungsform schematisch in Radialschnittansicht dargestellt. Gemäß der Darstellung in der Figur 4 ist die elektromagnetische Sende- und Empfangsvorrichtung 10 zwischen der Reifeninnenschicht 5 des Reifens 1 und einer Karkasseinlage 22 des Reifens 1 angeordnet.

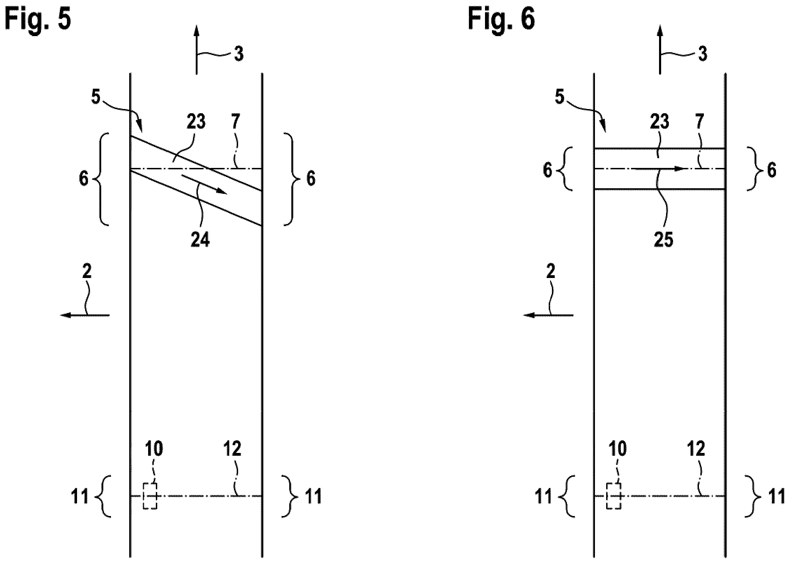

In der Figur 5 ist ein Bereich eines erfindungsgemäßen Reifens 1 schematisch dargestellt. Gemäß der Darstellung in der Figur 5 bildet die Reifeninnenschicht 5 eine Überlappung 23, wobei sich die Überlappung 23 in eine Richtung 24 erstreckt. Die Richtung 24 verläuft schräg zu der Rotationsachse 2.

Gemäß der in der Figur 5 dargestellten schematischen Ausführungsform ist die elektromagnetische Sende- und Empfangsvorrichtung 10 zwischen der Reifeninnenschicht 5 des Reifens und der in der Figur 5 nicht dargestellten Karkasseinlage 22 des Reifens 1 angeordnet.

In der Figur 6 ist ein Bereich des Reifens 1 gemäß einer weiteren Ausführungsform schematisch dargestellt. Gemäß der Darstellung in der Figur 6 und im Unterschied zu der Darstellung in der Figur 5 erstreckt sich die Überlappung 23 der Reifeninnenschicht 5 in eine Richtung 25. Die Richtung 25 liegt parallel zur der Rotationsachse 2.

### Bezugszeichenliste (ist Teil der Beschreibung)

- 1: Reifen
- 2: Rotationsachse
- 3: Umlaufrichtung
- 4: Laufstreifen
- 5: Reifeninnenschicht
- 6: Überlappungsbereich
- 7: erste geometrische Mittellinie
- 8: Symmetrieebene
- 9: Mittelpunkt
- 10: elektromagnetische Sende- und Empfangsvorrichtung
- 11: Anbringungsbereich
- 12: zweite geometrische Mittelinie
- 13: erster Schnittpunkt
- 14: zweiter Schnittpunkt
- 15: erste Verbindungslinie
- 16: zweite Verbindungslinie
- 17: Winkel
- 18: Seitenwandbereich
- 19: Wulstbereich
- 20: Seitenwandoberfläche
- 21: Seitenwandkomponente
- 22: Karkasseinlage
- 23: Überlappung
- 24: Richtung
- 25: Richtung
- 26: Rimstripkomponente
- 27: Seitenwandbauteil
- 28: Ausdehnung der Reifeninnenschicht

## Patentansprüche

1. Reifen (1), wobei der Reifen (1) um eine Rotationsachse (2) in eine Umlaufrichtung (3) rotierbar ist, aufweisend einen Laufstreifen (4) und eine Reifeninnenschicht (5) und einen Überlappungsbereich (6), wobei der Überlappungsbereich (6) ein solcher Bereich des Reifens (1) ist, in dem sich die Reifeninnenschicht (5) überlappt, und wobei der Überlappungsbereich (6) eine erste geometrische Mittellinie (7) aufweist, und aufweisend eine Symmetrieebene (8), wobei die Rotationsachse (2) senkrecht zu der Symmetrieebene (8) ausgerichtet ist und die Symmetrieebene (8) in einem Mittelpunkt (9) schneidet, und aufweisend eine elektromagnetische Sende und Empfangsvorrichtung (10), wobei die elektromagnetische Sende- und Empfangsvorrichtung (10) in einem Anbringungsbereich (11) des Reifens (1) angeordnet ist, wobei der Anbringungsbereich (11) eine zweite geometrische Mittellinie (12) aufweist, wobei die erste geometrische Mittellinie (7) die Symmetrieebene (8) in einem ersten Schnittpunkt (13) schneidet und die zweite geometrische Mittelinie (12) die Symmetrieebene (8) in einem zweiten Schnittpunkt (14) schneidet, wobei eine erste Verbindungslinie (15) von dem ersten Schnittpunkt (13) zu dem Mittelpunkt (9) führt und eine zweite Verbindungslinie (16) von dem zweiten Schnittpunkt (14) zu dem Mittelpunkt (9) führt, wobei die zweite geometrische Mittelinie (12) gleich der ersten geometrischen Mittellinie (7) rechtwinklig zu der Umlaufrichtung (3) verläuft, **dadurch gekennzeichnet, dass** die erste Verbindungslinie (15) und die zweite Verbindungslinie (16) einen Winkel (17) von 160° bis 200° einschließen.

2. Reifen (1) nach Anspruch 1, **dadurch gekennzeichnet, dass** die erste Verbindungslinie (15) und die zweite Verbindungslinie (16) einen Winkel (17) von 170° bis 190° einschließen.

3. Reifen (1) nach einem der vorhergehenden Ansprüche, **dadurch gekennzeichnet, dass** die elektromagnetische Sende- und Empfangsvorrichtung (10) in einem Seitenwandbereich (18) des Reifens (1) oder in einem Wulstbereich (19) des Reifens (1) angeordnet ist.

4. Reifen (1) nach einem der vorhergehenden Ansprüche, **dadurch gekennzeichnet, dass** die elektromagnetische Sende- und Empfangsvorrichtung (10) in keinem unmittelbaren Kontakt mit einer zu der elektromagnetischen Sende- und Empfangsvorrichtung (10) nächstgelegenen Seitenwandoberfläche (20) steht und insbesondere in keinem unmittelbaren Kontakt mit einem zu der elektromagnetischen Sende- und Empfangsvorrichtung (10) nächstgelegenen Seitenwandkomponente (21) steht.

5. Reifen (1) nach einem der vorhergehenden Ansprüche, **dadurch gekennzeichnet, dass** die elektromagnetische Sende- und Empfangsvorrichtung (10) zwischen der Reifeninnenschicht (5) des Reifens (1) und einer Karkasseinlage (22) des Reifens (1) angeordnet ist.

## Claims

1. Tyre (1), wherein the tyre (1) is rotatable in a direction of rotation (3) about an axis of rotation (2), having a tread (4) and a tyre inner layer (5) and an overlapping region (6), wherein the overlapping region (6) is such a region of the tyre (1) in which the tyre inner layer (5) overlaps, and wherein the overlapping region (6) has a first geometrical centre line (7), and having a plane of symmetry (8), wherein the axis of rotation (2) is aligned perpendicular to the plane of symmetry (8) and intersects the plane of symmetry (8) at a midpoint (9), and having an electromagnetic transmitting and receiving device (10), wherein the electromagnetic transmitting and receiving device (10) is arranged in an attachment region (11) of the tyre (1), wherein the attachment region (11) has a second geometrical centre line (12), wherein the first geometrical centre line (7) intersects the plane of symmetry (8) at a first point of intersection (13) and the second geometrical centre line (12) intersects the plane of symmetry (8) at a second point of intersection (14), wherein a first connecting line (15) leads from the first point of intersection (13) to the midpoint (9) and a second connecting line (16) leads from the second point of intersection (14) to the midpoint (9), wherein the second geometrical centre line (12) like the first geometrical centre line (7) runs at right angles to the direction of rotation (3), **characterized in that** the first connecting line (15) and the second connecting line (16) include an angle (17) of 160° to 200°.

2. Tyre (1) according to Claim 1, **characterized in that** the first connecting line (15) and the second connecting line (16) include an angle (17) of 170° to 190°.

3. Tyre (1) according to one of the preceding claims, **characterized in that** the electromagnetic transmitting and receiving device (10) is arranged in a sidewall region (18) of the tyre (1) or in a bead region (19) of the tyre (1).

4. Tyre (1) according to one of the preceding claims, **characterized in that** the electromagnetic transmitting and receiving device (10) is not in direct contact with a sidewall surface (20) closest to the electromagnetic transmitting and receiving device (10) and in particular is not in direct contact with a sidewall component (21) closest to the electromagnetic transmitting and receiving device (10).

5. Tyre (1) according to one of the preceding claims, **characterized in that** the electromagnetic transmitting and receiving device (10) is arranged between the tyre inner layer (5) of the tyre (1) and a carcass inlay (22) of the tyre (1).

## Revendications

1. Pneumatique (1), le pneumatique (1) pouvant être mis en rotation sur un axe de rotation (2) dans un sens de rotation (3), le pneumatique comprenant une bande de roulement (4) et une couche intérieure (5) du pneumatique et une zone de chevauchement (6), la zone de chevauchement (6) étant une zone du pneumatique (1) dans laquelle la couche intérieure (5) du pneumatique vient chevaucher, et la zone de chevauchement (6) comportant un premier axe central géométrique (7), et présentant un plan de symétrie (8), l'axe de rotation (2) étant orienté perpendiculairement au plan de symétrie (8) et coupant le plan de symétrie (8) en un centre (9), et comportant un dispositif d'émission et de réception électromagnétique (10), le dispositif d'émission et de réception électromagnétique (10) étant disposé dans une zone de fixation (11) du pneumatique (1), la zone de fixation (11) comportant un deuxième axe central géométrique (12), le premier axe central géométrique (7) coupant le plan de symétrie (8) en un premier point d'intersection (13) et le deuxième axe central géométrique (12) coupant le plan de symétrie (8) en un deuxième point d'intersection (14), une première ligne de liaison (15) allant du premier point d'intersection (13) au centre (9) et une deuxième ligne de liaison (16) allant du deuxième point d'intersection (14) au centre (9), le deuxième axe central géométrique (12) s'étendant comme le premier axe central géométrique (7) perpendiculairement au sens de rotation (3), **caractérisé en ce que** la première ligne de liaison (15) et la deuxième ligne de liaison (16) forment un angle (17) de 160° à 200°.

2. Pneumatique (1) selon la revendication 1, **caractérisé en ce que** la première ligne de liaison (15) et la deuxième ligne de liaison (16) font un angle (17) de 170° à 190°.

3. Pneumatique (1) selon l'une des revendications précédentes, **caractérisé en ce que** le dispositif d'émission et de réception électromagnétique (10) est disposé dans une zone de flanc (18) du pneumatique (1) ou dans une zone de bourrelet (19) du pneumatique (1).

4. Pneumatique (1) selon l'une des revendications précédentes, **caractérisé en ce que** le dispositif d'émission et de réception électromagnétique (10) n'est pas en contact direct avec une surface de flanc (20) la plus proche du dispositif d'émission et de réception électromagnétique (10) et en particulier il n'est pas en contact direct avec un composant de flanc (21) le plus proche du dispositif d'émission et de réception électromagnétique (10).

5. Pneumatique (1) selon l'une des revendications précédentes, **caractérisé en ce que** le dispositif d'émission et de réception électromagnétique (10) est disposé entre la couche intérieure (5) du pneumatique (1) et un insert de carcasse (22) du pneumatique (1).
